(19) Europäisches Patentamt / European Patent Office / Office européen des brevets

(11) **EP 2 526 073 B1**

(12) **FASCICULE DE BREVET EUROPEEN**

(45) Date de publication et mention
de la délivrance du brevet:
**06.04.2016 Bulletin 2016/14**

(21) Numéro de dépôt: **11700552.0**

(22) Date de dépôt: **18.01.2011**

(51) Int Cl.:
*C04B 28/04* (2006.01)     *C04B 28/06* (2006.01)
*C02F 11/00* (2006.01)     *C04B 18/02* (2006.01)
*C04B 111/00* (2006.01)

(86) Numéro de dépôt international:
**PCT/EP2011/050634**

(87) Numéro de publication internationale:
**WO 2011/089127 (28.07.2011 Gazette 2011/30)**

(54) **PROCÉDÉ POUR PRÉPARER UN MATÉRIAU COMPOSITE À PARTIR DE DÉCHETS ET MATÉRIAU AINSI OBTENU**

VERFAHREN ZUR HERSTELLUNG EINES VERBUNDSTOFFES AUS ABFALL UND GEWONNENER STOFF

METHOD FOR PREPARING A COMPOSITE MATERIAL FROM WASTE AND RESULTING MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.01.2010 FR 1050363**

(43) Date de publication de la demande:
**28.11.2012 Bulletin 2012/48**

(73) Titulaire: **Commissariat à l'Énergie Atomique et aux Énergies Alternatives
75015 Paris (FR)**

(72) Inventeurs:
• **FOURNEL, Véronique**
**F-30200 Venejan (FR)**
• **ANTONUCCI, Pascal**
**F-20840 Meynes (FR)**
• **CEDAT, Nadège**
**F-30200 Bagnols-sur-Cèze (FR)**

(74) Mandataire: **Ilgart, Jean-Christophe
BREVALEX
95, rue d'Amsterdam
75378 Paris Cedex 8 (FR)**

(56) Documents cités:
WO-A1-91/05586     CH-A5- 660 876
JP-A- 2005 154 522     US-A- 5 256 338
US-A- 5 640 704

**Description**

**DOMAINE TECHNIQUE**

La présente invention concerne le domaine du traitement des déchets tels que des déchets industriels et/ou radioactifs se présentant notamment sous forme de boues.

Plus particulièrement, la présente invention concerne un procédé permettant de préparer un matériau composite à partir de tels déchets et de les inerter en mettant en oeuvre un matériau cimentaire sec et en les solidifiant, en les enrobant et/ou en les encapsulant dans le ciment obtenu.

Le procédé selon la présente invention permet ainsi d'obtenir un matériau composite notamment sous forme de granulés comprenant une matrice cimentaire piégeant des déchets tels que des déchets industriels et/ou radioactifs. La présente invention concerne également un matériau composite obtenu selon le procédé de la présente invention.

**ÉTAT DE LA TECHNIQUE ANTÉRIEURE**

Une station d'épuration industrielle traite les effluents liquides afin de réduire la charge polluante des effluents avant leur rejet. Cette réduction s'opère en piégeant les polluants minéraux et organiques par précipitation sous forme de composés insolubles qui par coagulation-floculation et décantation forment des boues résiduelles.

La réglementation française impose un inertage des déchets industriels dangereux ultimes avant leur stockage dans un centre de stockage de classe 1. L'inertage de ces déchets désigne leur stabilisation et leur solidification. La stabilisation permet de réduire la solubilité des polluants grâce à leur transformation sous une forme peu mobilisable par l'environnement. La solidification permet d'améliorer les propriétés physiques et mécaniques du déchet, et facilite sa manutention et son stockage.

De même, les stations de traitement des effluents liquides radioactifs ont pour rôle de collecter, d'entreposer et de traiter des effluents aqueux radioactifs. Le traitement utilise un procédé de coprécipitation pour décontaminer les effluents. Le traitement par coprécipitation permet de piéger les radioéléments par adsorption ou par échanges d'ions dans des précipités de différentes natures. La décontamination des radioéléments est effectuée par l'utilisation d'adsorbants. Certains d'entre eux tels que les hydroxydes ferreux et de cuivre ou le sulfate de baryum sont générés *in situ,* dans l'effluent à décontaminer. D'autres sont préformés tels que le ferrocyanure mixte de nickel et de potassium (ppFeNi) utilisé pour piéger le césium.

Après les réactions de précipitation et d'adsorption, la suspension subit une opération de floculation et de séparation solide-liquide par décantation. Après décantation, une fraction du surnageant décontaminé est évacuée vers le rejet, le restant étant évacué vers l'opération de séparation solide-liquide par filtration. La séparation solide-liquide est réalisée par exemple sur un filtre rotatif avec un média filtrant. Elle produit un filtrat décontaminé et des boues « déchets ultimes » qui sont ensuite conditionnées.

La cimentation est une des techniques permettant l'inertage des déchets notamment des déchets industriels et/ou radioactifs se présentant sous forme de boues.

Plus particulièrement, la cimentation de boues consiste classiquement à réaliser le malaxage (boue + ciment hydraulique) puis à couler le mélange obtenu dans un conteneur. La bonne qualité du malaxage pour obtenir un mélange homogène au niveau macroscopique ainsi que la possibilité de couler l'intégralité de l'enrobé sont des conditions incontournables pour utiliser un tel procédé.

L'inertage dans une matrice cimentaire présente cependant des difficultés inhérentes à la physico-chimie des boues à traiter. En effet, les suspensions d'hydroxydes métalliques dans le cas du fer par exemple présentent un comportement rhéologique non newtonien caractérisé par une contrainte seuil d'écoulement et une viscosité plastique élevées.

Dans certaines conditions, les suspensions d'hydroxydes de fer présentent une structure de type gel et on observe une forte augmentation des paramètres rhéologiques. Cette structure de type gel est le cas limite des suspensions concentrées, dans lesquelles tout le liquide de la phase dispersante est piégé dans les unités structurelles de la suspension qui sont ici les agrégats de précipité. La formation d'une structure de type gel à partir d'une suspension peut se faire au repos en plusieurs jours ou bien plus rapidement, lors de l'écoulement de la suspension. La concentration en solide, la teneur en sel et le cisaillement appliqué à la suspension sont les paramètres influençant la rhéologie au 1er ordre. Lors de la cimentation des boues d'hydroxydes métalliques, l'eau contenue dans la boue est liée au solide et n'est pas disponible pour assurer une rhéologie convenable de la pâte. Le comportement rhéologique du mélange est dépendant du comportement rhéologique de la boue. La cimentation de ce type de déchet nécessite d'utiliser un rapport massique Eau/Ciment (E/C) élevé afin d'obtenir l'ouvrabilité ou consistance souhaitée. Or l'accroissement du rapport E/C augmente la porosité, diminue les résistances mécaniques, qui peuvent ainsi ne plus atteindre le seuil requis en compression (typiquement 8 MPa), sans oublier une diminution significative du taux d'incorporation.

De plus, lors de la cimentation de déchets de nombreuses espèces chimiques contenues dans les boues peuvent précipiter et provoquer un raidissement rapide du mélange ou une prise éclair dans le malaxeur, phénomènes également potentiellement rédhibitoires.

Le brevet CH 660 876 propose un procédé pour inerter des boues industrielles essentiellement inorganiques notamment issues de l'industrie métallurgique. Dans le procédé décrit, les boues en suspension dans l'eau sont mélangées avec au moins un matériau solide sous forme de poudre et avec du formaldéhyde, le matériau solide pouvant être un ciment Portland.

Le brevet US 5 640 704 propose un procédé pour immobiliser et solidifier des métaux lourds, des espèces radioactives et des composés nitrés présents dans un déchet. Ce procédé consiste à mélanger le déchet avec un complexant correspondant à un composé à base de fer puis avec du ciment tel que du ciment de type Portland, le rapport quantité de déchet/quantité de ciment étant supérieur ou égal à 2.

La demande de brevet JP 2005/154522 propose un procédé pour agréger un sol contenant de l'eau, consistant à mélanger ledit sol riche en eau avec un polymère hydrosoluble puis à ajouter au mélange obtenu du ciment.

La demande internationale WO 91/05586 propose un procédé pour stabiliser les déchets notamment hydrocarbonés, dangereux dans une matrice pozzolanique/cimentaire. Le procédé décrit consiste à mélanger le déchet avec au moins un alcool, au moins un tensio-actif et éventuellement de l'eau, avant d'ajouter au mélange ainsi obtenu, un composé liant tel qu'un ciment Portland.

Le brevet US 5 256 338 concerne des matériaux solidifiés pour éliminer des déchets radioactifs et présentant des propriétés améliorées en termes de conservation et de réduction de relargage d'éléments radioactifs. Pour atteindre ce but, il est proposé d'ajouter un matériel fibreux au mélange de déchets radioactifs, de ciment et d'eau mis en oeuvre.

Il existe donc un réel besoin de proposer un procédé facile à mettre en oeuvre et permettant un inertage des déchets et notamment des déchets industriels et/ou radioactifs se présentant avantageusement sous forme de boues.

## EXPOSÉ DE L'INVENTION

La présente invention permet de remédier aux inconvénients et problèmes techniques listés ci-dessus.

En effet, les travaux des inventeurs ont permis de mettre au point un nouveau procédé de cimentation, dans un mode « semi-homogène », différent de l'approche classique qui repose sur l'obtention d'un mélange homogène et fluide. Dans le procédé selon la présente invention, le déchet est solidifié dans le malaxeur en présence d'un mélange cimentaire sec, ce qui permet la préparation extemporanée d'un ciment à partir de l'eau contenue dans le déchet. Ce procédé permet de stabiliser et solidifier les boues dont la chimie occasionne une solidification instantanée ou une rhéologie trop élevée dans le malaxeur en présence de ciment.

L'avantage principal du procédé selon la présente invention est de cimenter et de mettre en forme des boues impossibles à mélanger classiquement en cimentation soit à cause de leur rhéologie (boues sous forme de gel), soit à cause de leurs caractéristiques physiques ou chimiques qui conduisent à une solidification dans le malaxeur.

Le procédé selon la présente invention est préparé à partir des déchets sous forme de boues et à partir du mélange cimentaire sec i.e. sans apport d'eau supplémentaire et, plus particulièrement, le procédé selon la présente invention ne met en oeuvre que des déchets sous forme de boues et un mélange cimentaire sec. Cette stabilisation de boues sans apport d'eau supplémentaire permet donc de maximiser le taux d'incorporation de matière sèche de boue dans le matériau composite ou monolithe final et de minimiser le terme source hydrogène car il n'y a pas d'eau libre dans la matrice cimentaire. Cette opération peut être réalisée avec tous les mélanges cimentaires secs.

Le procédé selon la présente invention permet d'inerter les boues de coprécipitation en sortie de filtre, c'est-à-dire à l'état solide, ce qui évite une re-dissolution de la boue dans de l'eau et, par conséquent, l'augmentation de volume du déchet.

Enfin, le procédé selon la présente invention permet de solidifier et de stabiliser des boues en utilisant des paramètres de formulation optimaux et ainsi d'obtenir un matériau dont les caractéristiques physiques et chimiques sont maximales. En particulier, le terme source hydrogène est potentiellement diminué car il n'y a pas d'eau libre dans la matrice. Le procédé selon la présente invention permet également d'insérer une barrière physique limitant les échanges entre les déchets et leur environnement et notamment limitant le relâchement des radionucléides (RN).

Par conséquent, la présente invention concerne un procédé pour préparer un matériau composite uniquement à partir d'un déchet se présentant sous forme de boue et d'un mélange cimentaire sec, comprenant une étape consistant à mettre en contact ledit déchet se présentant sous forme de boue présentant une siccité comprise entre 20 et 65% avec un mélange cimentaire sec, avec un rapport massique entre ledit déchet sous forme de boue (masse exprimée en g) et ledit mélange cimentaire sec (masse exprimée en g) compris entre 0.3 et 1. Le procédé selon la présente invention ne met en oeuvre qu' un déchet se présentant sous forme de boue et un mélange cimentaire sec, sans ajout d'aucun autre additif durant l'une quelconque des étapes du procédé.

Par « matériau composite », on entend, dans le cadre de la présente invention, un assemblage d'une matrice cimentaire et de déchets. Cet assemblage peut se présenter sous la forme d'un mélange intime entre les déchets et la matrice cimentaire, d'une encapsulation des déchets par la matrice cimentaire et/ou d'un enrobage des déchets par la matrice cimentaire. Le matériau composite selon la présente invention ne contient que des déchets et une matrice cimentaire.

Les termes « monolithe » et « matériau composite », dans la présente invention, ont des significations similaires et peuvent être utilisés de façon interchangeable.

Il convient de remarquer que le matériau composite selon la présente invention ne peut être pompé.

Par « mélange cimentaire sec », on entend, dans le cadre de la présente invention, un mélange de matériaux finement broyés donnant, en présence d'eau, un mélange plastique capable de faire prise et de durcir au cours du temps pour donner une matrice cimentaire hydraulique qui se présente sous forme d'un matériau solide et poreux à l'état sec. Le durcissement de la matrice cimentaire est le résultat de l'hydratation des matériaux finement broyés du mélange cimentaire sec.

Dans le cadre de la présente invention, l'eau nécessaire à cette hydratation est exclusivement apportée par les déchets se présentant sous forme de boues. En effet, le procédé selon la présente invention est mis en oeuvre sans apport d'eau supplémentaire.

Le mélange cimentaire sec est constitué, en totalité ou en partie, d'un clinker finement broyé. Par « clinker », on entend un mélange comprenant un ou plusieurs éléments choisis dans le groupe constitué par :

- un calcaire,
- un calcaire ayant une teneur en CaO variant entre 50 et 60%,
- une source d'alumine telle que de la bauxite ordinaire ou de la bauxite rouge,
- une argile, et
- une source de sulfate telle que du gypse, du sulfate de calcium hémihydraté, du plâtre, de l'anhydrite naturelle ou des cendres sulfocalciques,

ledit (ou lesdits) élément(s) étant concassé(s), homogénéisé(s) et porté(s) à haute température supérieure à 1200°C, notamment supérieure à 1300°C, en particulier de l'ordre de 1450°C. Par « de l'ordre de 1450°C », on entend une température de 1450°C $\pm$ 100°C, avantageusement une température de 1450°C $\pm$ 50°C. L'étape de cuisson à haute température est appelée « clinkerisation ». Après la préparation du clinker et avant ou pendant son broyage, au moins un autre additif comme une source de sulfate telle que précédemment définie peut lui être ajouté.

Tout mélange cimentaire sec produisant, après hydratation, une matrice cimentaire hydraulique est utilisable dans le cadre de la présente invention. A titre d'exemples non limitatifs, le mélange cimentaire sec mis en oeuvre dans le cadre de la présente invention est choisi dans le groupe constitué par un Ciment Portland tel que du CEM I 52,5N Calcia Beaucaire HRC, un Ciment Portland composé tel que le CEM 2 52,5N Tercem Lafarge la malle, un mélange cimentaire alumineux, un mélange cimentaire sulfo-alumineux, un mélange cimentaire ferro-alumineux et leurs mélanges.

Ainsi, le mélange cimentaire sec mis en oeuvre dans le cadre de l'invention peut être un ciment Portland ou un ciment Portland composé. Un ciment Portland comprend avantageusement entre 50 et 70% de silicate tricalcique $[(CaO)_3SiO_2]$, entre 10 et 25% de silicate bicalcique $[(CaO)_2SiO_2]$, entre 5 et 15% d'aluminate tricalcique $[(CaO)_3Al_2O_3]$ , entre 5 et 10% d'aluminoferrite tétracalcique $[(CaO)_4Al_2O_3Fe_2O_3]$. Un tel ciment Portland peut être mélangé avec des composés secondaires pour donner un « ciment Portland composé » dans lequel la quantité de composés secondaires comme laitiers de haut fourneau, fumée de silice, pouzzolane, cendres volantes, schiste calciné ou du calcaire est supérieure à 3%, notamment comprise entre 5 et 80%, en particulier, comprise entre 10 et 60% en poids par rapport au poids total dudit ciment Portland composé.

En variante, le mélange cimentaire sec mis en oeuvre dans le cadre de l'invention peut être un mélange cimentaire alumineux, i.e. dont le clinker comprend majoritairement des aluminates de calcium.

En variante encore, le mélange cimentaire sec mis en oeuvre dans le cadre de l'invention peut également être un mélange cimentaire sulfo-alumineux ou ferro-alumineux. La demande de brevet EP 0 900 771 décrit notamment des mélanges cimentaires à base de clinkers sulfo-alumineux et ferro-alumineux. Ces clinkers sont des liants cimentaires aux propriétés de durcissement rapide et obtenus par une clinkerisation à une température variant entre 1200 et 1350°C de mélanges contenant au moins une source de chaux telle que des calcaires ayant une teneur en CaO variant entre 50 et 60%, au moins une source d'alumine et au moins une source de sulfate telles que précédemment définies. Avantageusement, un clinker sulfo-alumineux comprend entre 28 et 40% de $Al_2O_3$, entre 3 et 10% de $SiO_2$, entre 36 et 43% de CaO, entre 1 et 3% de $Fe_2O_3$, et entre 8 et 15% de $SO_3$. Un clinker ferro-alumineux comprend, quant à lui, entre 25 et 30% de $Al_2O_3$, entre 6 et 12% de $SiO_2$, entre 36 et 43% de CaO, entre 5 et 12% de $Fe_2O_3$, et entre 5 et 10% de $SO_3$.

Tout mélange cimentaire sec est caractérisé par sa surface spécifique. Cette dernière exprimée en cm$^2$/g correspond à la surface développée par unité de masse. Elle permet donc de caractériser la finesse du broyage : plus le broyage du mélange cimentaire sec est fin, plus sa surface spécifique est grande. La surface spécifique est mesurée au moyen du test de Blaine, dit de perméabilité à l'air, selon la relation d'Arcy-Kozeny, qui établit que la traversée d'un lit de granules par un fluide est affectée par la surface spécifique de ces granules.

La surface spécifique du mélange cimentaire sec mis en oeuvre dans le cadre de la présente invention peut être mesurée sur un perméabilimètre de Blaine tel que le Blaine BSA1 de la Société Acmel (Champlan, France) ou via une mesure BET selon la Méthode Brunauer, Emett et Teller.

Avantageusement, le mélange cimentaire sec mis en oeuvre dans le cadre de la présente invention présente une surface spécifique comprise entre 3000 et 7000 $cm^2$/g, notamment entre 3500 et 7000 $cm^2$/g et, en particulier, entre 4000 et 7000 $cm^2$/g.

Par « déchet se présentant sous forme de boue », on entend, dans le cadre de la présente invention, un déchet choisi dans le groupe constitué par une boue issue du traitement des eaux usées, une boue issue du traitement des effluents liquides industriels, une boue issue du traitement des effluents liquides radioactifs, une boue issue des fonds de silos et leurs mélanges. De fait, le déchet sous forme de boue mis en oeuvre dans le cadre de la présente invention peut appartenir à un ou plusieurs types de boues précédemment listés. De manière avantageuse, le déchet sous forme de boue mis en oeuvre dans le cadre de la présente invention est une boue issue du traitement d'effluents liquides industriels et/ou radioactifs. Le déchet sous forme de boue est avantageusement un déchet résiduel ou résiduaire tel que défini dans le domaine du traitement des déchets.

Le déchet sous forme de boue mis en oeuvre dans le cadre de la présente invention peut contenir un ou plusieurs éléments parmi des composés carbonés non toxiques, des polluants toxiques, des éléments corrosifs, des composants radioactifs, des métaux lourds et des composés inorganiques. A titre d'exemples non limitatifs, ces éléments sont choisis dans le groupe constitué par les hydroxydes métalliques, les oxydes métalliques, les carbonates, le ferrocyanure mixte de nickel et de potassium, le chlore, le fluor, le soufre, le zinc, le phosphore, le mercure, le plomb, le cadmium, l'arsenic, le phénol, les cyanures, les ferrocyanures, les oxalates, les silicates, les acides humiques, le strontium, le ruthénium, le césium, des émetteurs $\alpha$, tels que l'américium, le plutonium et l'uranium et leurs mélanges. Le déchet sous forme de boue mis en oeuvre dans le cadre de la présente invention contient principalement des hydroxydes métalliques.

La composition du déchet sous forme de boue dépendra non seulement de la provenance de l'effluent liquide initial mais aussi du traitement utilisé pour préparer une boue à partir de cet effluent (décantation, filtration, coagulation, floculation, coprécipitation, adsorption et autres traitements physico-chimiques, etc.).

Une boue se définit comme une suspension ou dispersion d'éléments solides dans un liquide. Le déchet sous forme de boue mis en oeuvre dans le cadre de la présente invention peut donc se présenter sous différentes formes et ce, en fonction de la quantité de liquide qu'il contient. Avantageusement, le déchet mis en oeuvre dans le cadre de la présente invention se présente sous forme d'une boue solide ou d'une boue pâteuse.

La siccité d'une boue caractérise le % massique de matière sèche par rapport à la masse totale de boue. Ainsi, on peut définir l'équation suivante :

$$\text{Siccité} = \text{\% de matière sèche} = 100 - \text{\% d'eau.}$$

La siccité d'une boue peut être obtenue expérimentalement sur un échantillon de boue dont l'homogénéité est garantie par agitation. Un prélèvement d'une certaine quantité de cet échantillon de l'ordre d'une centaine de grammes est placé sur un plateau sec. L'ensemble (plateau + échantillon prélevé) est pesé : $M_0$ représentant la masse obtenue. Le plateau et l'échantillon prélevé sont ensuite placés dans un four chauffé à une température supérieure ou égale à 105°C pour sécher l'échantillon. Le séchage est poursuivi jusqu'à ce que la masse de l'ensemble (plateau + échantillon séché) soit constante. Cette masse constante est désignée $M_1$. La siccité de l'échantillon de boue analysé se calcule donc selon la formule :

$$\text{Siccité} = 100 * M_1/M_o$$

Le déchet sous forme de boue mis en oeuvre dans le cadre de la présente invention présente une siccité comprise entre 20 et 65%.

Si le déchet sous forme de boue mis en oeuvre dans le cadre du procédé selon l'invention ne présente pas une siccité suffisante, il peut, préalablement à la mise en oeuvre du procédé, être soumis à un quelconque traitement connu de l'homme du métier permettant de diminuer la quantité de liquide dans une boue. A titre d'exemples non limitatifs, on peut citer un séchage notamment par évaporation naturelle, un séchage thermique, un drainage, une centrifugation, une filtration, une déshydratation notamment sur filtre-presse à membranes ou filtre à bande, etc.

Dans le procédé selon la présente invention, le rapport massique entre le déchet sous forme de boue (masse exprimée en g) et le mélange cimentaire sec (masse exprimée en g) mis en oeuvre est compris entre 0,3 et 1 et, plus particulièrement, entre 0,4 et 0,95.

Dans le procédé selon la présente invention, le rapport massique E/C avec E représentant la masse d'eau dans le déchet sous forme de boue (exprimée en g) et C représentant la masse du mélange cimentaire sec (exprimée en g) utilisé est avantageusement compris entre 0,2 et 0,7 et notamment entre 0,3 et 0,6. De façon plus avantageuse, le rapport E/C est de l'ordre de 0,4 (i.e. 0,4 $\pm$ 0,1) afin de limiter l'eau résiduelle dans le matériau composite. Pour rappel, la masse d'eau dans le rapport E/C correspond à la masse d'eau dans le déchet sous forme de boue puisqu'aucun apport d'eau supplémentaire n'est mis en oeuvre dans le cadre du procédé selon l'invention.

En fonction des caractéristiques du déchet sous forme de boue mis en oeuvre et notamment en fonction de la siccité de cette boue, l'homme du métier saura choisir un mélange cimentaire sec adapté sans aucun effort inventif notamment sur la base du fait que, avantageusement, :

- plus la siccité du déchet sous forme de boue est faible, plus le mélange cimentaire sec choisi doit avoir une surface spécifique élevée ;
- plus la siccité du déchet sous forme de boue est importante, plus la quantité de mélange cimentaire sec utilisé est faible et plus on augmente le taux d'incorporation de matière sèche de boue dans le matériau monolithe.

Ainsi, le mélange cimentaire sec est choisi notamment en fonction de sa chimie, de sa demande en eau et de sa surface spécifique qui doit être la plus élevée possible.

Le procédé de préparation d'un matériau composite à partir d'un déchet sous forme de boue selon la présente invention comprend avantageusement les étapes consistant à :

a) mettre en contact ledit déchet sous forme de boue avec un mélange cimentaire sec,
b) mélanger ledit déchet sous forme de boue et le mélange cimentaire sec afin d'obtenir un matériau composite ;
c) éventuellement compacter le matériau composite obtenu à l'étape (b).

Les étapes (a) et (b) du procédé selon la présente invention sont avantageusement mises en oeuvre dans un malaxeur. Tout malaxeur connu de l'homme du métier est utilisable dans le cadre de la présente invention. A titre d'exemples non limitatifs, on peut citer un mélangeur NAUTA®, un malaxeur HOBART® et un malaxeur HENSCHEL®.

Plus particulièrement, l'étape de mise en contact du déchet sous forme de boue avec le mélange cimentaire sec (étape (a)) consiste à saupoudrer le mélange cimentaire sec sur le déchet sous forme de boue préalablement introduit dans un malaxeur.

L'action de « saupoudrer » ou « fariner » le déchet se présentant sous forme de boue de mélange cimentaire sec assèche la surface et permet d'émietter le mélange.

Lors du malaxage lors de l'étape (b) du procédé, l'eau initialement présente dans le déchet se présentant sous forme de boue sert intégralement à l'hydratation du mélange cimentaire sec. Le procédé selon la présente invention met donc en oeuvre un « séchage chimique de la boue » qui conduit à la formation d'une capsule de ciment autour des sels, d'où une sensibilité moindre à la composition chimique de la boue. Cette barrière est chimiquement stabilisée, on a ainsi réalisé une encapsulation de la boue.

Le malaxage lors de l'étape (b) du procédé selon l'invention du mélange déchet sous forme de boue et mélange cimentaire sec se fait à une vitesse relativement lente, tout comme le malaxage du déchet sous forme de boue préalablement à la mise en oeuvre du procédé selon l'invention. Par « vitesse relativement lente », on entend, dans le cadre de la présente invention, une vitesse de rotation du rotor du malaxeur inférieure à 300 tr/min, notamment inférieure à 200 tr/min, en particulier, inférieure à 100 tr/min, plus particulièrement comprise entre 5 et 70 tr/min. A titre d'exemple non limitatif, dans le cas d'un malaxeur normalisé, la vitesse d'agitation est de 140 tr/min et du planétaire de 62 tr/min.

Le matériau composite obtenu suite à l'étape (b) du procédé selon la présente invention se présente avantageusement sous forme de granulés ou boulettes. Les granulés ou boulettes ainsi obtenu(e)s présentent une plage granulaire s'étendant de 2 $\mu$m à 15 mm, notamment de 5 $\mu$m à 10 mm et, en particulier, de 10 $\mu$m à 3 mm.

Le procédé selon la présente invention étant réalisé quasiment à sec, le nettoyage du malaxeur est facilité. Le taux de récupération de matière est plus important par rapport à un procédé de cimentation classique car les granulés obtenus ne présentent pas le caractère collant des mélanges homogènes très visqueux. L'utilisation d'un racloir permet de limiter les rétentions dans le malaxeur. Les volumes d'effluents de rinçage sont notablement diminués et ces effluents sont de plus peu chargés en matière en suspension.

Le matériau composite obtenu suite à l'étape (b) du procédé selon la présente invention peut être compacté (étape (c)) notamment par pastillage à froid. Cette étape optionnelle de compactage est avantageusement mise en oeuvre manuellement ou par tout moyen capable, par application d'une pression, de transformer ou réduire les granulés obtenus suite à l'étape (b) du procédé en une forme solide plus compacte telle qu'un monolithe, une pastille, un bloc ou une couche. Un tel moyen est notamment une presse hydraulique, un compacteur de déchets, une presse à compacter ou une plaque vibrante de compactage. Le procédé selon la présente invention permet donc d'obtenir un matériau composite stable, homogène et possédant une résistance mécanique à la compression élevée.

Dans une variante avantageuse de l'étape (c) du procédé selon l'invention, le compactage peut être réalisé directement dans le fût de stockage.

La pression appliquée doit être suffisante pour obtenir un solide monolithique, mais pas trop élevée afin de préserver l'eau nécessaire aux réactions d'hydratation du ciment et qui assurent la cohésion du matériau composite. Avantageusement, durant l'étape (c) de compactage, la pression appliquée au matériau obtenu suite à l'étape (b) est inférieure à 150 MPa, notamment inférieure à 150 MPa et, en particulier, comprise entre 5 et 90 MPa.

Les étapes (a), (b) et (c) du procédé selon la présente invention sont avantageusement mises en oeuvre à une température comprise entre 4 et 40°C, notamment entre 10 et 30°C et, en particulier, à température ambiante. Par « température ambiante », on entend une température de l'ordre de 20°C (i.e. 20°C $\pm$ 5°C).

La présente invention décrit également un procédé pour le traitement et/ou l'inertage des déchets consistant à préparer un matériau composite à partir desdits déchets selon un procédé tel que précédemment défini.

Par « traitement et/ou inertage d'un déchet », on entend, dans le cadre de la présente invention, une solidification et une stabilisation dudit déchet en un matériau solide présentant une perméabilité à l'eau et une fraction lixiviable réduites et une tenue mécanique améliorée par rapport au déchet initial.

La présente invention concerne enfin un matériau composite susceptible d'être préparé par un procédé tel que précédemment défini.

Le matériau composite selon la présente invention est le matériau obtenu soit suite à l'étape (b) du procédé, soit suite à l'étape (c) du procédé telles que précédemment définies. Par conséquent, le matériau composite selon l'invention peut se présenter soit sous forme de granulés ou de boulettes, soit sous une forme plus compacte telle qu'un monolithe, une pastille, un bloc ou une couche.

Le procédé selon la présente invention est un procédé qui ne nécessite aucun apport d'eau supplémentaire. Par conséquent, le procédé selon l'invention permet de solidifier et stabiliser des déchets sous forme boues quasiment « à sec » conduisant à une matrice de conditionnement optimisée en terme de taux d'incorporation du déchet. Le taux d'incorporation de matière sèche du déchet sous forme de boue dans le matériau composite final est donc maximisé par rapport aux matériaux de l'art antérieur.

Le taux d'incorporation massique de matière sèche (Ti) dans le matériau composite obtenu suite au procédé selon la présente invention se calcule selon la formule suivante :

$$Ti = 100 * [M_S / (M_B + M_C)]$$

avec $M_S$ représentant la masse de matière sèche du déchet sous forme de boue (exprimée en g), $M_B$ représentant la masse de déchet sous forme de boue (exprimée en g) et $M_C$ représentant la masse du mélange cimentaire sec (exprimée en g).

Avantageusement, le taux d'incorporation massique de matière sèche (Ti) dans le matériau composite obtenu suite au procédé selon la présente invention est supérieur à 5, notamment supérieur à 10, en particulier, supérieur à 15 et, plus particulièrement, supérieur à 20.

La présente invention concerne aussi l'utilisation d'un matériau composite selon l'invention pour traiter et/ou inerter des déchets.

D'autres caractéristiques et avantages de la présente invention apparaîtront encore à l'homme du métier à la lecture des exemples ci-dessous donnés à titre illustratif et non limitatif, en référence aux figures annexées.

**BRÈVE DESCRIPTION DES DESSINS**

La Figure 1 est une photographie présentant l'aspect et les dimensions des granulés obtenus par le procédé selon la présente invention avant (Figure 1A) et après prise du ciment (Figure 1B).

La Figure 2 est une photographie d'une pastille d'environ 90 cm$^3$ (57 mm de diamètre et 36 à 38 mm de hauteur) obtenue notamment par compactage du mélange boue + ciment mis en oeuvre selon le procédé de la présente invention.

La Figure 3 est une photographie présentant l'aspect interne d'une pastille obtenue par le procédé selon la présente invention.

La Figure 4 est une photographie présentant un fragment d'une pastille obtenue par le procédé selon la présente invention, immergé dans de l'eau déminéralisée (au bout de 90 jours).

La Figure 5 est une photographie présentant une boue solide susceptible d'être mise en oeuvre dans le cadre de la présente invention dont l'extrait sec est de 37,7%.

## EXPOSÉ DÉTAILLÉ DE MODES DE RÉALISATION PARTICULIERS

I. **Procédé selon la présente invention.**

La boue est introduite dans le malaxeur en premier, le mobile tournant à petite vitesse. Pour un malaxeur normalisé de laboratoire, la vitesse d'agitation est de 140 tr/min. On saupoudre ensuite la boue de ciment jusqu'à l'obtention de boulettes.

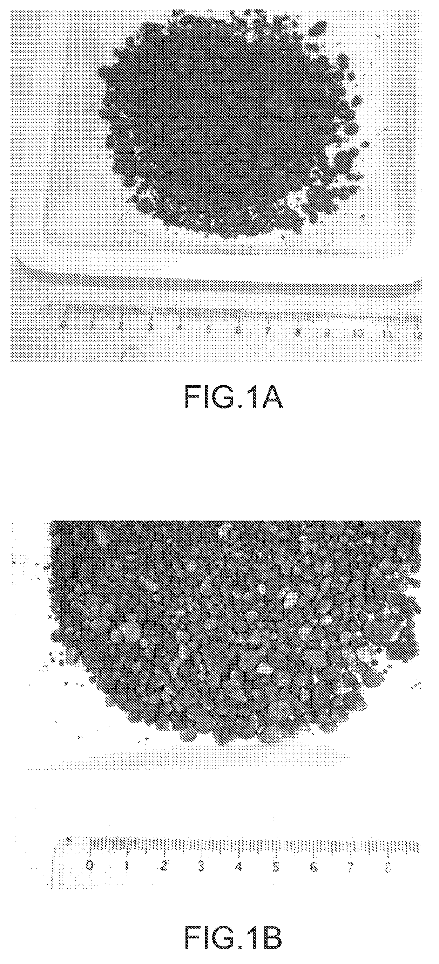

La Figure 1 présente l'aspect et les dimensions des granulés obtenus avant (Figure 1A) et après (Figure 1B) prise du ciment. La dimension des granulés est fonction de la vitesse de rotation du malaxeur. Ainsi, l'utilisation d'une vitesse de rotation plus importante (285 tr/min sur un malaxeur normalisé de laboratoire) permet d'effriter le matériau composite et d'obtenir un diamètre moyen des granulés plus faible.

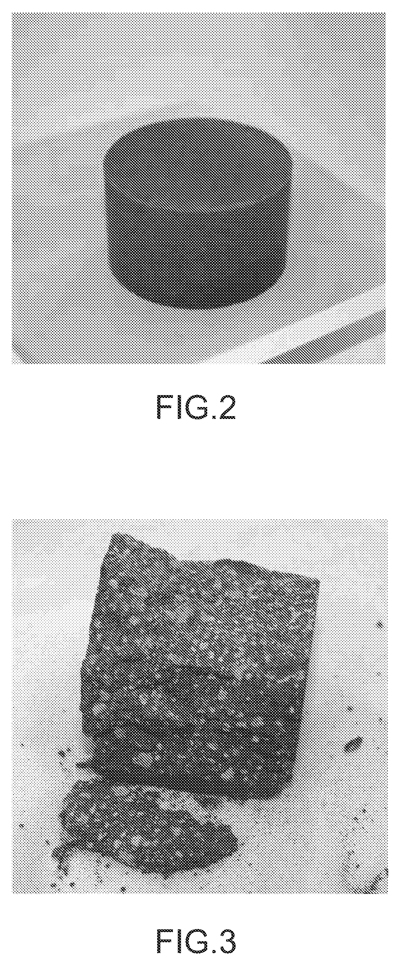

Les particules obtenues sont humides et malléables et peuvent donc être compactées à l'aide d'une presse. Les particules sont versées dans un conteneur, dans lequel elles vont être compactées. La Figure 2 présente la pastille obtenue après pastillage à froid avec une presse hydraulique (7,5 MPa < P < 15,2 MPa) correspondant à 2 T dans le cas présent.

Le phénomène d'encapsulation de la boue obtenue dans le cadre du procédé selon la présente invention est visible sur la Figure 3 qui présente l'intérieur de la pastille.

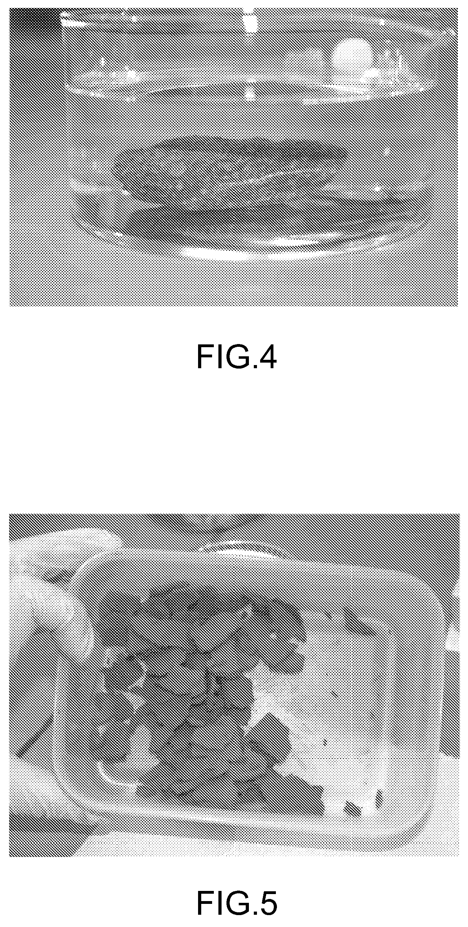

La boue encapsulée dans du ciment conformément au procédé selon la présente invention est stabilisée chimiquement. En effet, lorsque l'on introduit une pastille dans l'eau ou un fragment de pastille dans l'eau (pendant 90 jours), aucune dégradation n'est observée (Figure 4).

II. **Boues et ciments mis en oeuvre dans le procédé selon la présente invention.**

La boue est avantageusement filtrée afin d'être sous forme solide ou très pâteuse (Figure 5) et d'avoir une siccité la plus grande possible afin d'augmenter le taux de matière sèche.

Le Tableau 1 ci-après rassemble les caractéristiques des boues et des ciments utilisés.

*Tableau 1: Caractéristiques physico-chimiques des boues et ciments utilisés*

| Boue | Composition chimique | Extrait sec | Ciment | Surface de blaine |
|---|---|---|---|---|
| A | $Fe(OH)_2$ $Fe(OH)_3$ $Cu(OH)_2$ $BaSO_4$ PPFeNi | 22,4% | CEM 1 52,5N Calcia Beaucaire HRC | 4270 |
| A | | 35,94% | CEM 1 52,5N Calcia Beaucaire HRC | 4270 |
| B | | 37,67% | CEM 1 52,5N Calcia Beaucaire HRC | 4270 |
| B | | 40,72% | CEM 1 52,5N Calcia Beaucaire HRC | 4270 |
| B | | 34,49% | CEM 2 52,5N Tercem Lafarge la malle | 6250 |
| C | 48% de $CaCO_3$ | 56,6% | CEM 1 52,5N Calcia Beaucaire HRC | 4270 |

La masse de boue est introduite dans le malaxeur. Le mobile tournant à petite vitesse, on saupoudre ensuite la boue de ciment jusqu'à l'obtention de boulettes. L'action de « fariner » la boue solide de ciment assèche la surface et permet d'émietter le mélange.

Les masses de boue et de ciment utilisées pour les différents essais sont rassemblées dans le Tableau 2.

Le mélange est ensuite compacté manuellement ou avec une presse hydraulique. Les pressions typiquement appliquées sont indiquées dans le Tableau 2.

*Tableau 2 : Masses de boue et de ciment utilisées caractéristiques du mélange*

| Boue | Boue | | | Ciment | Caractéristiques de la pastille | | | |
|---|---|---|---|---|---|---|---|---|
| Boue | Masse introduite (g) | Masse de matière sèche (g) | Masse d'eau contenue dans la boue (g) | Masse introduite (g) | Pression (N/m$^2$) | E/C | Taux d'incorporation massique de boue | Taux d'incorporation massique de matière sèche |
| A | 150,6 | 33,75 | 116,85 | 382 | | 0,31 | 28 | 6,3 |
| A | | | | 458,7 | manuelle | 0,25 | 24,7 | 5,5 |
| A | 100 | 35,95 | 64,06 | 160 | 0,16 | 0,4 | 38,5 | 13,8 |
| B | 85 | 32 | 53 | 132,5 | 0,16 | 0,4 | 39,1 | 14,7 |
| B | 83 | 33,8 | 49,2 | 123 | 0,08 | 0,4 | 40,3 | 16,4 |
| B | 85 | 29,3 | 55,7 | 97,35 | 0,08 | 0,57 | 46,6 | 16,1 |
| C | 100 | 56,6 | 43,4 | 108,5 | 0,08 | 0,4 | 48 | 27 |

### III. Propriétés des pastilles obtenues selon le procédé de la présente invention.

Les pastilles obtenues sont ensuite conservées à 20°C. Les quatre conditions de cure utilisées sont sous air, en sac étanche, sous eau ou dans une enceinte climatique à 95% d'humidité. Les pastilles ne présentent aucune dégradation ou fissuration aux différentes échéances de temps de conservation et pour les différentes conditions de stockage. Les résistances mécaniques à la compression des différentes pastilles sont rassemblées dans le Tableau 3 ci-après.

*Tableau 3: Conditions de conservation et résistances mécaniques en compression des pastilles*

| Essai | E/C | Taux d'incorporation massique de matière sèche | Condition de stockage | Temps de conservation (jours) | R compression (MPa) |
|---|---|---|---|---|---|
| 2 | 0,25 | 5,5 | 20°C / 95%humidité | 7 | 84 |
| 3 | 0,4 | 13,8 | 20°C / 95%humidité | 7 | 13 |
| 4 | 0,4 | 14,7 | 20°C/Sous Eau | 90 | 30 |
| 5 | 0,4 | 16,4 | 20°C/Sous Air | 28 | 9 |
| 6 | 0,57 | 16,1 | 20°C/Sac étanche | 30 | 30 |
| 7 | 0,4 | 27 | 20°C/Sous Eau | 38 | 23 |

### Revendications

1. Procédé pour préparer un matériau composite uniquement à partir d'un déchet se présentant sous forme de boue et d'un mélange cimentaire sec, comprenant une étape consistant à mettre en contact, sans apport d'eau supplémentaire, ledit déchet se présentant sous forme de boue présentant une siccité comprise entre 20 et 65% avec un mélange cimentaire sec, avec un rapport massique entre ledit déchet sous forme de boue (masse exprimée en g) et ledit mélange cimentaire sec (masse exprimée en g) compris entre 0,3 et 1.

2. Procédé selon la revendication 1, **caractérisé en ce que** ledit mélange cimentaire sec est choisi dans le groupe constitué par un Ciment Portland, un Ciment Portland composé, un mélange cimentaire alumineux, un mélange cimentaire sulfo-alumineux, un mélange cimentaire ferro-alumineux et leurs mélanges.

3. Procédé selon la revendication 1 ou 2, **caractérisé en ce que** ledit mélange cimentaire sec présente une surface spécifique comprise entre 3000 et 7000 cm$^2$/g, notamment entre 3500 et 7000 cm$^2$/g et, en particulier, entre 4000 et 7000 cm$^2$/g.

4. Procédé selon l'une quelconque des revendications 1 à 3, **caractérisé en ce que** ledit déchet se présentant sous forme de boues est choisi dans le groupe constitué par une boue issue du traitement des eaux usées, une boue issue du traitement des effluents liquides industriels, une boue issue du traitement des effluents liquides radioactifs, une boue issue des fonds de silos et leurs mélanges.

5. Procédé selon l'une quelconque des revendications précédentes, **caractérisé en ce que** ledit déchet se présente sous forme d'une boue solide ou d'une boue pâteuse.

6. Procédé selon l'une quelconque des revendications précédentes, **caractérisé en ce que** le rapport massique entre ledit déchet sous forme de boue (masse exprimée en g) et ledit mélange cimentaire sec (masse exprimée en g) est compris entre 0,4 et 0,95.

7. Procédé selon l'une quelconque des revendications précédentes, **caractérisé en ce que** le rapport massique E/C avec E représentant la masse d'eau dans ledit déchet sous forme de boue (exprimée en g) et C représentant la masse dudit mélange cimentaire sec (exprimée en g) est compris entre 0,2 et 0,7 ; notamment entre 0,3 et 0,6 et, de façon plus avantageuse, le rapport E/C vaut 0,4 $\pm$ 0,1.

8. Procédé selon l'une quelconque des revendications précédentes, **caractérisé en ce que** ledit procédé comprend les étapes consistant à :

    a) mettre en contact ledit déchet sous forme de boue avec un mélange cimentaire sec,
    b) mélanger ledit déchet sous forme de boue et le mélange cimentaire sec afin d'obtenir un matériau composite ;
    c) éventuellement compacter le matériau composite obtenu à l'étape (b).

9. Procédé selon l'une quelconque des revendications précédentes, **caractérisé en ce que** ladite étape de mise en contact du déchet sous forme de boue avec le mélange cimentaire sec consiste à saupoudrer le mélange cimentaire sec sur le déchet sous forme de boue préalablement introduit dans un malaxeur.

10. Procédé selon la revendication 8 ou 9, **caractérisé en ce que** le matériau composite obtenu suite à ladite étape (b) du procédé se présente sous forme de granulés ou boulettes présentant une plage granulaire s'étendant de 2 $\mu$m à 15 mm, notamment de 5 $\mu$m à 10 mm et, en particulier, de 10 $\mu$m à 3 mm.

11. Matériau composite susceptible d'être préparé par un procédé tel que défini à l'une quelconque des revendications 1 à 10.

12. Matériau composite selon la revendication 11, **caractérisé en ce que** le taux d'incorporation massique de matière sèche dans ledit matériau composite est supérieur à 5, notamment supérieur à 10, en particulier, supérieur à 15 et, plus particulièrement, supérieur à 20.

13. Utilisation d'un matériau composite selon la revendication 11 ou 12 pour traiter et/ou inerter des déchets.

**Patentansprüche**

1. Verfahren zur Herstellung eines Verbundmaterials ausschließlich auf Grundlage von Abfall in Form von Schmutz und einer Trockenzementmischung, umfassend einen Schritt des Inkontaktbringens des Abfalls in Form von Schmutz, der eine Trockenheit zwischen 20 und 65% aufweist, mit einer Trockenzementmischung ohne Zugabe von zusätzlichem Wasser, mit einem Massenverhältnis zwischen dem Abfall in Form von Schmutz (Masse ausgedrückt in g) und der Trockenzementmischung (Masse ausgedrückt in g) zwischen 0,3 und 1.

2. Verfahren nach Anspruch 1, **dadurch gekennzeichnet, dass** die Trockenzementmischung ausgewählt ist aus der Gruppe gebildet durch einen Portlandzement, einen Verbundportlandzement, eine aluminiumhaltige Zementmischung, eine schwefel-aluminiumhaltige Zementmischung, eine eisenaluminiumhaltige Zementmischung und deren Mischungen.

3. Verfahren nach Anspruch 1 oder 2, **dadurch gekennzeichnet, dass** die Trockenzementmischung eine spezifische Oberfläche zwischen 3000 und 7000 cm$^2$/g aufweist, insbesondere zwischen 3500 und 7000 cm$^2$/g und weiter insbesondere zwischen 4000 und 7000 cm$^2$/g.

4. Verfahren nach einem der Ansprüche 1 bis 3, **dadurch gekennzeichnet, dass** der Abfall in Form von Schmutz ausgewählt ist aus der Gruppe gebildet durch einen Schmutz, der aus der Verarbeitung von Brauchwassern stammt, einem Schmutz, der aus der Verarbeitung von industriellen Abwässern stammt, einem Schmutz, der aus der Verarbeitung von flüssigen radioaktiven Abwässern stammt, einem Schmutz, der aus dem Boden von Silos stammt, und deren Mischungen.

5. Verfahren nach einem der vorhergehenden Ansprüche, **dadurch gekennzeichnet, dass** der Abfall die Form eines festen Schmutzes oder eines pastösen Schmutzes aufweist.

6. Verfahren nach einem der vorhergehenden Ansprüche, **dadurch gekennzeichnet, dass** das Massenverhältnis zwischen dem Abfall in Form von Schmutz (Masse ausgedrückt in g) und der Trockenzementmischung (Masse ausgedrückt in g) zwischen 0,4 und 0,95 enthalten ist.

7. Verfahren nach einem der vorhergehenden Ansprüche, **dadurch gekennzeichnet, dass** das Massenverhältnis E/C, wobei E die Masse von Wasser in dem Abfall in Form von Schmutz (ausgedrückt in g) darstellt und C die Masse der Trockenzementmischung (ausgedrückt in g) darstellt, zwischen 0,2 und 0,7 enthalten ist, insbesondere zwischen 0,3 und 0,6, und wobei vorzugsweise das Verhältnis E/C 0,4 $\pm$ 0,1 beträgt.

8. Verfahren nach einem der vorhergehenden Ansprüche, **dadurch gekennzeichnet, dass** das Verfahren die folgenden Schritte umfasst:

   a) Inkontaktbringen des Abfalls in Form von Schmutz mit einer Trockenzementmischung,
   b) Mischen des Abfalls in Form von Schmutz und der Trockenzementmischung, um ein Verbundmaterial zu erhalten;
   c) gegebenenfalls Verdichten des in Schritt b) erhaltenen Verbundmaterials.

9. Verfahren nach einem der vorhergehenden Ansprüche, **dadurch gekennzeichnet, dass** der Schritt des Inkontaktbringens des Abfalls in Form von Schmutz mit der Trockenzementmischung darin besteht, die Trockenzementmischung auf den Abfall in Form von Schmutz zu streuen, der zuvor in eine Mischmaschine eingefüllt wurde.

10. Verfahren nach Anspruch 8 oder 9, **dadurch gekennzeichnet, dass** das im Anschluss an den Schritt b) des Verfahrens erhaltene Verbundmaterial die Form von Granulat oder Kügelchen aufweist, die einen granularen Bereich aufweisen, der sich von 2 $\mu$m bis 15 mm erstreckt, insbesondere von 5 $\mu$m bis 10 mm, und weiter insbesondere von 10 $\mu$m bis 3 mm.

11. Verbundmaterial, das durch ein Verfahren wie in einem der Ansprüche 1 bis 10 definiert herstellbar ist.

12. Verbundmaterial nach Anspruch 11, **dadurch gekennzeichnet, dass** die Masseninkorporationsrate von Trockenmaterial in dem Verbundmaterial größer als 5 ist, insbesondere größer als 10, weiter insbesondere größer als 15 und noch weiter insbesondere größer als 20.

13. Verwendung eines Verbundmaterials nach Anspruch 11 oder 12 zur Behandlung und/oder Inertisierung von Abfällen.


**Claims**

1. A method for preparing a composite material exclusively from waste appearing as sludge and from a dry cement mixture, comprising a step consisting in putting into contact, without providing any additional water, said waste appearing as sludge having dryness comprised between 20 and 65% with a dry cement mixture, with a mass ratio between said waste as a sludge (mass expressed in g) and said dry cement mixture (mass expressed in g) comprised between 0.3 and 1.

2. The method according to claim 1, **characterized in that** said dry cement mixture is selected from the group consisting of Portland Cement, composite Portland Cement, aluminous cement mixture, sulfo-aluminous cement mixture, ferro-aluminous cement mixture and mixtures thereof.

3. The method according to claim 1 or 2, **characterized in that** said dry cement mixture has a specific surface area comprised between 3,000 and 7,000 cm$^2$/g, notably between 3,500 and 7,000 cm$^2$/g and, in particular between 4,000 and 7,000 cm$^2$/g.

4. The method according to any of claims 1 to 3, **characterized in that** said waste appearing as sludges is selected from the group consisting of sludge stemming from the treatment of waste waters, sludge stemming from the treatment of industrial liquid effluents, sludge stemming from the treatment of radioactive liquid effluents, sludge stemming from bottoms of silos and mixtures thereof.

5. The method according to any of the preceding claims, **characterized in that** said waste appears as a solid sludge or as a slurry sludge.

6. The method according to any of the preceding claims, **characterized in that** the mass ratio between said waste as a sludge (mass expressed in g) and said dry cement mixture (mass expressed in g) is comprised between 0.4 and 0.95.

7. The method according to any of the preceding claims, **characterized in that** the W/C mass ratio with W representing the mass of water in said waste as a sludge (expressed in g) and C representing the mass of dry cement mixture (expressed in g) is comprised between 0.2 and 0.7; notably between 0.3 and 0.6 and, more advantageously, the W/C ratio has the value 0.4 ± 0.1.

8. The method according to any of the preceding claims, **characterized in that** said method comprises the steps:

   a) putting said waste as a sludge in contact with a dry cement mixture,
   b) mixing said waste as a sludge and the dry cement mixture in order to obtain a composite material;
   c) optionally compacting the composite material obtained in step (b).

9. The method according to any of the preceding claims, **characterized in that** said step for putting the waste as a sludge in contact with the dry cement mixture consists in sprinkling the dry cement mixture on the waste as a sludge introduced beforehand into a kneader.

10. The method according to claim 8 or 9, **characterized in that** the composite material obtained following said step (b) of the method appears as granules or pellets having a granular range extending from 2 $\mu$m to 15 mm, notably from 5 $\mu$m to 10 mm and, in particular from 10 $\mu$m to 3 mm.

11. A composite material which may be prepared by a method as defined in any of claims 1 to 10.

12. The composite material according to claim 11, **characterized in that** the dry material mass incorporation level in said composite material is greater than 5, notably greater than 10, in particular greater than 15 and more particularly, greater than 20.

13. Use of a composite material according to claim 11 or 12 for treating and/or inertizing wastes.

FIG.1A

FIG.1B

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 660876
- US 5640704 A
- JP 2005154522 A
- WO 9105586 A
- US 5256338 A
- EP 0900771 A